Europäisches Patentamt

(19) European Patent Office

Office européen des brevets

(11) Numéro de publication: **0 145 552 B1**

(12) **FASCICULE DE BREVET EUROPEEN**

(45) Date de publication du fascicule du brevet:
08.10.86

(21) Numéro de dépôt: 84402293.9

(22) Date de dépôt: 13.11.84

(51) Int. Cl.⁴: **B 01 D 35/12, B 01 D 29/34, B 01 D 25/26**

(54) Filtre à deux empilements distincts de filtration.

(30) Priorité: 16.11.83 FR 8318229

(43) Date de publication de la demande:
19.06.85 Bulletin 85/25

(45) Mention de la délivrance du brevet:
08.10.86 Bulletin 86/41

(84) Etats contractants désignés:
AT BE CH DE GB IT LI NL SE

(56) Documents cités:
EP - A - 0 022 021
FR - A - 2 534 149

Notice: "FILTRATION" - Georges Moathi-FRANCE-1980

(73) Titulaire: GEORGES MOATTI, Société Anonyme,
125, Avenue Pierre Curie, F-78210 Saint-Cyr-L'Ecole
(FR)

(72) Inventeur: Christophe, Théophile Jean, 9, rue Mozart,
F-78330 Fontenay le Fleury (FR)
Inventeur: Moatti, Jean-Claude Prosper, 13, rue Moreau
Vauthier, F-92100 Boulogne (FR)

(74) Mandataire: Hoisnard, Jean-Claude et al, Cabinet Beau
de Lomenie 55, rue d'Amsterdam, F-75008 Paris (FR)

ACTORUM AG

## Description

On connaît déjà des filtres ayant une zone de filtration principale avec décolmatage périodique des éléments de filtration, et une zone de filtration secondaire, également avec décolmatage périodique de ses éléments de filtration (voir par exemple la notice: «FILTRATION» — Georges Moatti — FRANCE – 1980).

Un tel filtre est, par exemple, consitué par:

— un corps de filtre comportant plusieurs chambres distinctes isolées les unes des autres,

— un empilement principal d'éléments de filtration contenu dans une desdites chambres dite chambre principale,

— un empilement secondaire d'éléments de filtration contenu dans une autre desdites chambres dite chambre secondaire, chacun des éléments de filtration des empilements principal et secondaire ayant un centre évidé et une face cylindrique, comportant plusieurs secteurs isolés les uns des autres et étant muni sur ses périphéries radiales externe et interne d'orifices de communication de chacun de ses secteurs avec lesdites périphéries,

— un distributeur de sectionnement qui est ajusté à ladite face cylindrique, qui est monté rotatif autour de l'axe de la face cylindrique, et qui comporte *une* enceinte principale susceptible, dans une première position du distributeur, d'isoler un premier secteur d'un quelconque élément de filtration de l'empilement principal *des* autres secteurs dudit élément de filtration et de communiquer avec ledit premier secteur par l'intermédiaire de l'orifice de communication dudit premier secteur, *et, une* enceinte secondaire susceptible, dans une deuxième position du distributeur éventuellement confondue avec la première position, d'isoler un premier secteur d'un quelconque élément de filtration de l'empilement secondaire *des* autres secteurs dudit élément de filtration et de communiquer avec ledit premier secteur par l'intermédiaire de l'orifice de communication dudit premier secteur.

Selon l'art antérieur, le fluide utilisé pour décolmater les éléments de filtration de l'empilement principal est prélevé dans le fluide déjà filtré par cet empilement. De manière analogue, le fluide utilisé pour décolmater les éléments de filtration de l'empilement secondaire est également prélevé dans le fluide filtré par l'empilement principal. Ce deuxième prélèvement réduit d'autant le débit du fluide filtré par l'empilement principal effectivement utilisable; ce qui peut être considéré comme constituant un inconvénient. Pour remédier à cet inconvénient, l'invention propose une disposition nouvelle selon laquelle le décolmatage des éléments de filtration de l'empilement secondaire est effectué par le fluide ayant déjà décolmaté les éléments de filtration de l'empilement principal. Ainsi, peut être évité le deuxième prélèvement dans le fluide déjà filtré par l'empilement principal.

A cet effet, l'invention consiste donc, dans un filtre tel que précédemment décrit, caractérisé en ce qu'un passage, dont est muni le distributeur, relie les enceintes principale et secondaire.

Selon une réalisation préférée, un conduit de liaison relie la chambre secondaire à la face cylindrique et débouche dans cette face cylindrique par un orifice de décharge situé en un emplacement tel que, d'une part, dans la deuxième position du distributeur, celui-ci obture ledit orifice de décharge, d'autre part, le distributeur comportant un autre passage interne reliant ses deux enceintes principale et secondaire à sa périphérie externe, dans les positions du distributeur autres que ladite deuxième position, l'orifice de décharge communique avec ledit autre passage.

L'avantage de cette disposition nouvelle est bien d'économiser, dans le débit filtré par l'empilement principal, la valeur du débit nécessaire au décolmatage des éléments de filtration de l'empilement secondaire. De cette manière, avec un filtre ayant un encombrement donné, on constate une augmentation du rendement global.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels:

— la figure 1 est une coupe axiale d'un filtre conforme à l'invention, dans une première configuration de fonctionnement;

— les figures 2 et 3 sont des coupes, respectivement suivant II-II et III-III, de la figure 1 ;

— la figure 4 est une vue développée de la face cylindrique du distributeur du filtre de la figure 1 et de la face en regard des empilements d'éléments de filtration;

— la figure 5 est une coupe axiale du même filtre que celui de la figure 1, mais dans une deuxième configuration de fonctionnement;

— la figure 6 est une coupe suivant VI-VI de la figure 5; et,

— la figure 7 est une vue développée analogue à celle de la figure 4, mais correspondant à la configuration de la figure 5.

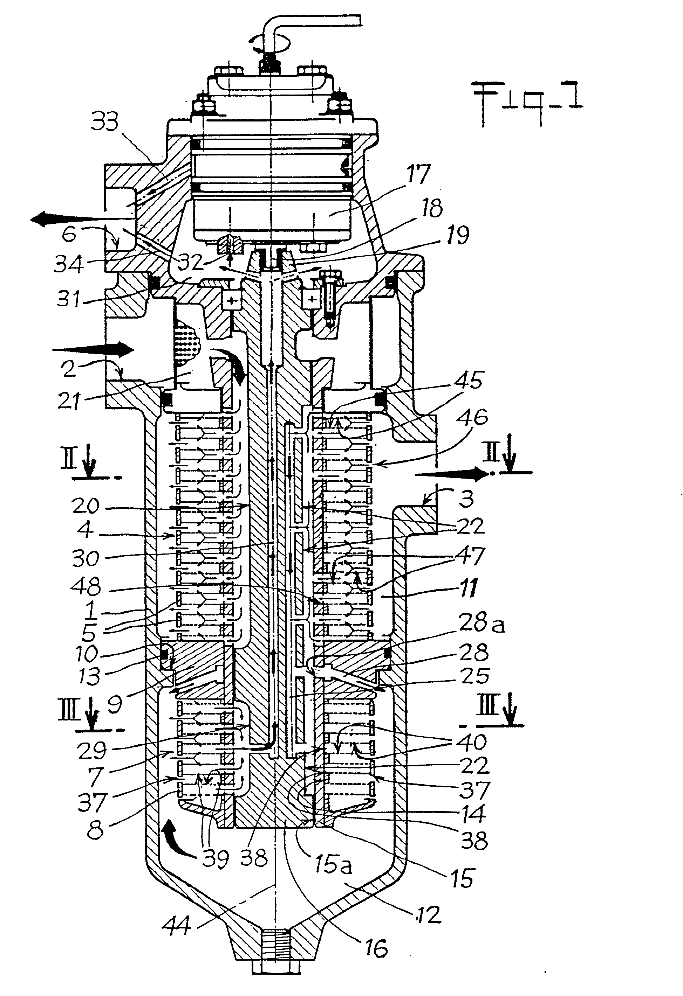

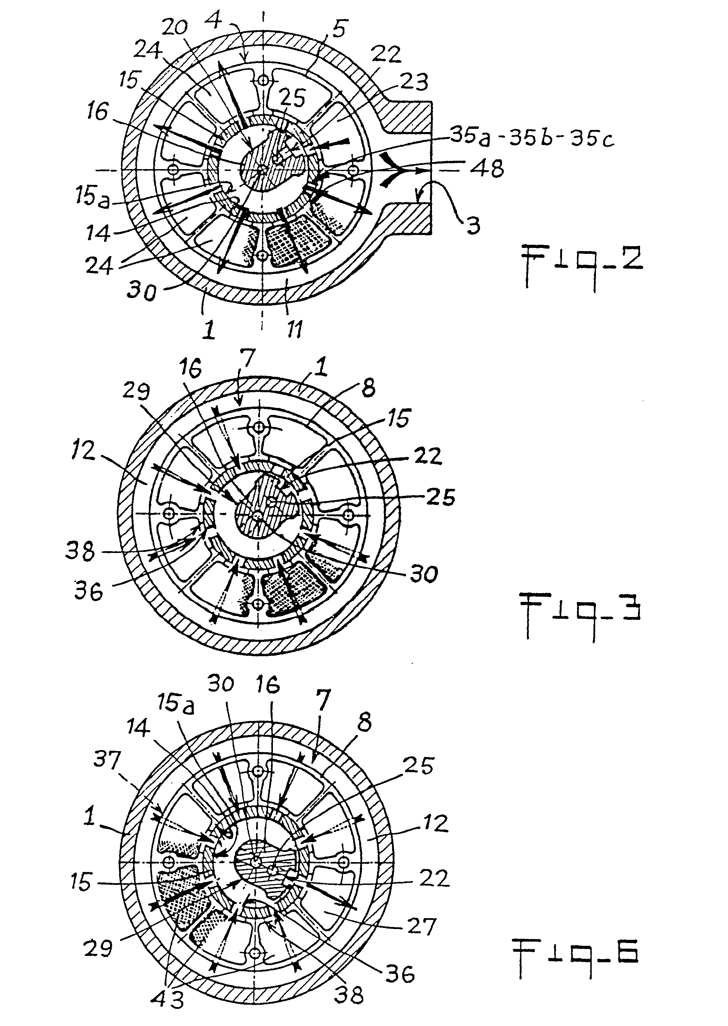

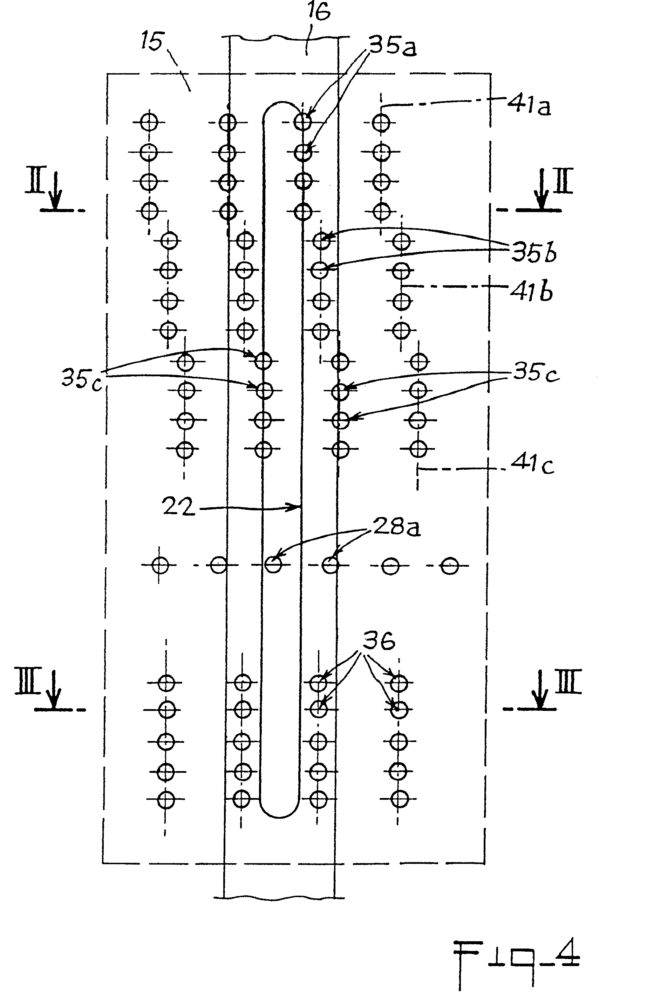

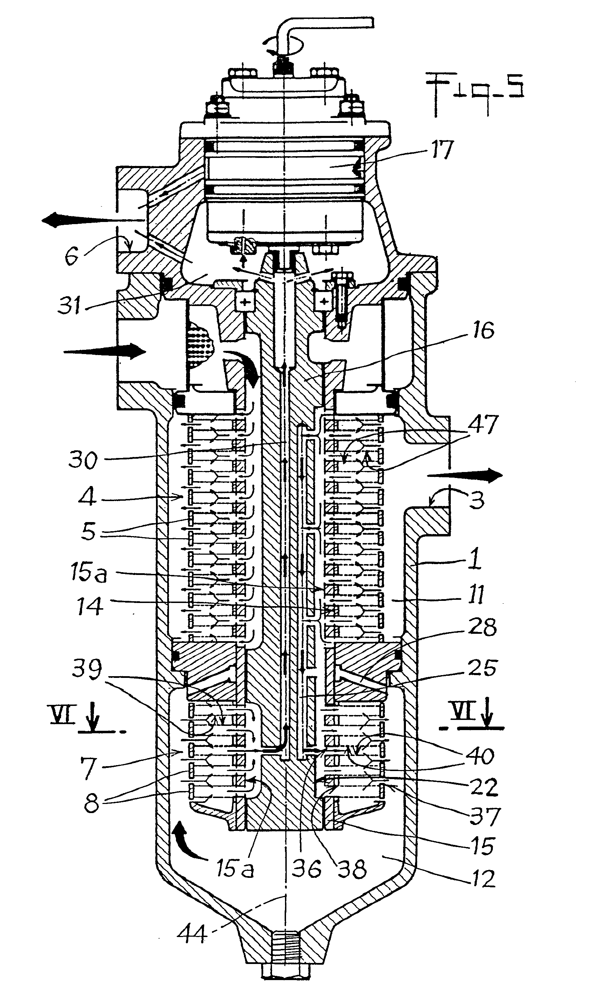

Le filtre des figures 1 à 4 comporte:

— un corps de filtre 1, muni d'un raccord d'admission 2 du fluide devant être filtré, d'un raccord d'évacuation 3 du fluide filtré par un empilement principal 4 d'éléments de filtration 5, et d'un raccord d'évacuation 6 du fluide de décolmatage des éléments de filtration 5, après filtration de ce fluide de décolmatage par un empilement secondaire 7 d'éléments de filtration 8,

— lesdits empilements principal 4 et secondaire 7, séparés par une pièce intermédiaire 9, qui est en appui sur un épaulement 10, dont est muni le corps 1, et qui ménage l'intérieur dudit corps deux chambres principale 11 et secondaire 12 séparées avec étanchéité (13), la chambre principale 11 communiquant avec le raccord d'évacuation 3,

— un alésage 14, commun aux deux empilements 4 et 7, auquel est ajustée une bague intérieure 15, à l'intérieur de laquelle un distributeur 16 est monté dans un alésage 15a, rotatif autour d'un axe 44,

— un moteur hydraulique 17, d'entraînement pas à pas du distributeur 16, monté sur le corps 1 et attelé par une tête d'entraînement 18 à une extrémité 19 au distributeur 16,

— une gorge périphérique 20, ménagée dans le distributeur 16, qui est en communication avec la chambre d'admission 21 du fluide devant être filtré, elle-même étant en communication avec le raccord d'admission 2,

— une rainure 22, qui est ménagée dans le distributeur 16 et permet d'isoler *un* secteur angulaire 23 de certains seulement, ou de tous les éléments de filtration 5 de l'empilement principal 4 *des* autres secteurs angulaires 24 des mêmes éléments de filtration 5,

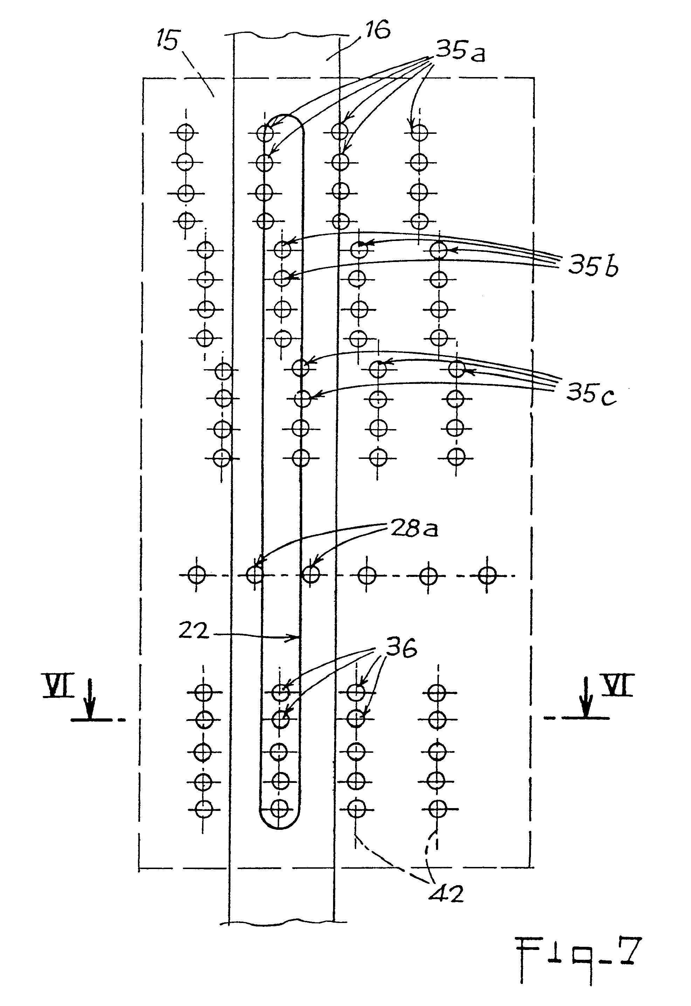

— la rainure 22, ménagée dans le distributeur 16 est susceptible de communiquer, d'une part (figures 1 et 3), par l'intermédiaire d'un conduit 25, interne au distributeur, avec l'orifice 28*a*, par lequel l'un des conduits 28, ménagés dans la pièce intermédiaire 9, débouche dans l'alésage 15*a* de la bague 15, d'autre part (figures 5 et 6), avec seulement un secteur angulaire 27 de chaque élément de filtration 8 de l'empilement secondaire 7,

— une gorge périphérique 29, ménagée dans le distributeur 16, qui communique, par un conduit 30, interne au distributeur 16, avec une chambre supérieure 31 ménagée dans le corps 1,

— des conduits d'alimentation 32 du moteur 17, communiquant avec la chambre supérieure 31,

— le conduit d'échappement 33 du moteur 17 communiquant avec le raccord d'évacuation 6,

— un conduit de liaison calibré (ayant une perte de charge déterminée) 34 reliant la chambre supérieure 31 au raccord d'évacuation 6.

Il convient de noter les dispositions suivantes:

— la rainure 22 est susceptible de communiquer, par l'intermédiaire de trous 35*a*, 35*b*, 35*c*, ménagés dans la bague 15 dans la zone de l'empilement principal 4, avec un secteur 23 des éléments de filtration correspondants 5;

— cette même rainure 22 est susceptible de communiquer, par l'intermédiaire de trous 36 ménagés dans la bague 15 dans la zone de l'empilement secondaire 7, avec un secteur 27 des éléments de filtration correspondants 8;

— le conduit 28, ménagé dans la pièce intermédiaire 9, débouche, en outre, dans la chambre secondaire 12;

— des orifices 37 des éléments de filtration 8 de l'empilement secondaire 7 sont disposés sur la périphérie externe de cet empilement et sont séparés d'orifices 38 des mêmes éléments de filtration disposés sur la périphérie interne et communiquant avec les trous 36 de la bague 15, par les tamis de filtration;

— ces tamis de filtration ont, chacun, une face 39, qui communique avec la chambre secondaire 12 par l'intermédiaire des orifices 37, *et,* une face 40, qui communique avec l'alésage central 14 par l'intermédiaire des orifices 38;

— les trous de la bague 15 disposés dans la zone de l'empilement principal 4 sont répartis, pour chaque colonne de secteurs 23 ou 24 superposés des éléments de filtration 5, en trois groupes distincts d'orifices 35*a*, 35*b*, 35*c*;

— les orifices de chaque groupe étant alignés sur une droite 41*a*, 41*b*, 41*c*, respectivement, parallèle à une génératrice de la surface cylindrique de l'alésage 15*a* de la bague 15; ces diverses droites 41*a*, 41*b*, 41*c*, étant, en outre, légèrement décalées l'une par rapport aux autres de manière que la rainure 22 ne communique en permanence qu'avec une section globale des trous 35*a* et/ou 35*b* et/ou 35*c* sensiblement constante et égale à la section globale des trous 35*a*, ou des trous 35*b*, ou des trous 35*c*, et non de l'ensemble des trous 35*a*, 35*b* et 35*c*;

— les trous 36 de la bague 15, qui correspondent aux orifices 38 des secteurs superposés d'une même colonne de secteurs d'éléments de filtration 8, sont alignés sur une droite 42, parallèle à une génératrice de la surface cylindrique de l'alésage 15*a* de la bague 15;

— selon la position relative du distributeur 16 par rapport à la bague 15, dans l'exemple représenté, *ou bien* la rainure 22 est isolée des trous 36 (figures 1, 3 et 4), et communique alors avec l'un des orifices 28*a* *ou bien* la rainure 22 communique avec les trous 36 de l'une des rangées de trous 36 (figures 5, 6 et 7) et est alors isolée des orifices 28*a*;

— les tamis de filtration des éléments de filtration 5 de l'empilement principal 4 ont, chacun, une face 45, qui communique avec la chambre principale 11 par l'intermédiaire d'orifices 46, *et,* une face 47, qui communique avec les trous 35*a*, 35*b* ou 35*c* de la bague 15 par l'intermédiaire d'orifices 48;

— l'axe du conduit 30 est confondu avec l'axe de rotation 44.

Le fluide devant être filtré, admis dans la chambre d'admission 21, parvient dans la gorge 20 du distributeur, passe à travers les orifices de la périphérie interne des secteurs 24 des éléments de filtration 5 qui sont en regard de la gorge 20, puis à travers les trous correspondant 35*a* et/ou 35*b* et/ou 35*c* de la bague 15, traversent les tamis, puis les orifices de la périphérie externe des mêmes secteurs, et ressort filtré dans la chambre principale 11, pour ensuite être évacué à travers le raccord d'évacuation 3.

Cependant, une partie du fluide filtré contenu dans la chambre principale 11 traverse, en sens inverse du précédent, de la périphérie externe vers la périphérie interne de l'empilement 4, ceux des secteurs 23 des éléments de filtration 5 qui sont disposés en regard de la rainure 22 (figure 2). Cette faible partie de fluide filtré permet de dégager des tamis desdits secteurs 23 les impuretés qui s'y étaient préalablement déposées et ainsi, en nettoyant ces tamis, de les rendre de nouveau aptes à une filtration efficace. Cette partie du fluide, qui traverse les tamis des secteurs 23 est collectée par la rainure 22 et véhiculée, chargée des impuretés détachées des tamis des secteurs 23 des éléments de filtration 5 en regard de la partie de la bague 15 correspondant aux orifices 28*a* et aux trous 36.

Dans la configuration des figures 1, 3 et 4, ce fluide chargé d'impuretés est déversé dans la chambre secondaire 12. A partir de cette chambre, le fluide traverse, de la périphérie externe vers la périphérie interne des secteurs des éléments de filtration de l'empilement secondaire 7, qui sont en regard de la gorge 29 du distributeur 16, et, filtré par les tamis desdits secteurs, de la gorge 29 est dirigé par le conduit 30, la chambre 31 et le conduit 34, vers le raccord d'évacuation 6 pour une nouvelle utilisation. A noter que, de manière également connue, une partie de ce fluide filtré contenu dans la chambre supérieure 31 est utilisée en tant que fluide d'alimentation du moteur 17 (conduits 32).

Dans la configuration des figures 5, 6 et 7, le fluide chargé d'impuretés, contenu dans la gorge 22, traverse les trous 36 et les orifices 38, dépose ses impuretés sur les faces 40 des tamis des secteurs 27 des éléments de filtration 8, et, traversant les orifices 37, parvient dans la chambre 12. Par le circuit déjà défini ci-avant, le fluide de la chambre 12 est filtré, puis véhiculé jusqu'au raccord d'évacuation 6.

Les remarques suivantes peuvent être faites:

— pendant le fonctionnement, le fluide contenu dans la chambre 12 s'en échappe en traversant les orifices 37, puis en déposant les impuretés qu'il contient sur les faces 39 des secteurs 43 autres que le secteur 27 de chaque élément de filtration 8;

— naturellement, si des impuretés ont été préalablement déposées sur les faces 40 des tamis des éléments de filtration 8, ce qui se produit dans la configuration des figures 5, 6 et 7, le fluide, qui traverse lesdits tamis pour s'échapper hors de la chambre secondaire 12, décolle ces impuretés et les véhicule dans la gorge 29, puis dans les conduits 30, jusqu'au raccord d'évacuation 6 ce qui ne se produisait pas dans les filtres antérieurement connus, dans lesquels le fluide de lavage/décolmatage des tamis des secteurs 27 (figures 5, 6 et 7) était du fluide filtré provenant de la chambre principale 11;

— par contre, ce qui est également nouveau et très avantageux, c'est de réaliser le lavage/décolmatage des tamis des secteurs 27 des éléments de filtration 8, en chassant les impuretés déposées sur leurs faces 39, au moyen du même fluide que celui qui a déjà réalisé le lavage/décolmatage des secteurs 23 des éléments de filtration 5 et qui est contenu dans la rainure 22, car est ainsi réalisée l'économie du prélèvement dans le fluide déjà filtré contenu dans la chambre principale 11, qui était antérieurement nécessaire, comme indiqué dans le paragraphe précédent;

— enfin, l'opération de lavage/décolmatage des secteurs 27 des éléments de filtration 8 peut n'être réalisée, comme c'est le cas dans la réalisation représentée, que lorsque le fluide contenu dans la rainure 22 ne se déverse par directement dans la chambre secondaire 12 (orifices 28a obturés par le distributeur 16 = figure 7).

En résumé, la nouveauté apportée par l'invention consiste à avoir réalisé un raccordement en série de la rainure du distributeur permettant le lavage/décolmatage des éléments de filtration 5 de l'empilement principal 4 avec la rainure permettant le lavage/décolmatage des éléments de filtration 8 de l'empilement secondaire 8. Dans la réalisation représentée, il s'agit d'une rainure unique 22.

L'avantage résultant est une économie du fluide déjà filtré par l'empilement principal 4, et, par conséquent, une très appréciable augmentation du rendement de filtration. Pour effectuer l'opération de lavage/décolmatage des tamis des éléments de filtration 8 de l'empilement secondaire 7, il est en effet possible d'utiliser un fluide déjà partiellement pollué, à la place d'un fluide rigoureusement filtré, puisque, de toute façon, les impuretés sont arrêtées par les faces 40 des tamis. Cela est analogue à une utilisation d'eau non potable, pour laver un objet ne nécessitant pas l'utilisation d'eau potable, à la place d'eau potable.

L'inconvénient précédemment mentionné est d'avoir un fluide parvenant dans la chambre supérieure 31 moins pur qu'avec les filtres antérieurs. Ceci n'est qu'un inconvénient apparent, car la qualité de ce fluide est souvent suffisante pour l'utilisation dudit fluide. Alors, dans ce dernier cas, l'augmentation du nombre des impuretés contenues dans le fluide de la chambre supérieure 31, est sans conséquence et ne constitue plus un inconvénient.

Dans le cas où le fluide contenu dans la chambre 31 contiendrait trop d'impuretés pour permettre une alimentation satisfaisante du moteur 17, il resterait possible de réaliser l'alimentation de ce moteur par un fluide convenablemeent épuré, par exemple, par un prélèvement d'une partie du fluide filtré traversant le raccord d'évacuation 3, de manière d'ailleurs connue en soi.

Un autre avantage réside dans la possibilité de réaliser le lavage/décolmatage de l'empilement principal de *manière continue* du fait de la simultanéité du lavage/décolmatage de l'empilement secondaire.

L'invention n'est pas limitée à la réalisation représentée, mais en couvre au contraire toutes les variantes qui pourraient lui être apportées sans sortir de son cadre, ni de son esprit.

**Revendications**

1. Filtre constitué par:
— un corps de filtre (1) comportant plusieurs chambres distinctes (11, 12, 31) isolées les unes des autres,
— un empilement principal (4) d'éléments de filtration (5) contenu dans une (11) desdites chambres dite chambre principale (11),
— un empilement secondaire (7) d'éléments de filtration (8) contenu dans une autre (12) desdites chambres dite chambre secondaire (12), chacun des éléments de filtration des empilements principal et secondaire ayant un centre évidé (14) et une face cylindrique (14, 15a), comportant plusieurs secteurs (23; 24; 27; 43) isolés les uns des autres et étant muni sur ses périphéries radiales externe et interne d'orifices de communication de chacun de ses secteurs avec lesdites périphéries,

— un distributeur de sectionnement (16), qui est ajusté à ladite face cylindrique (15a) qui est monté rotatif autour de l'axe (44) de la face cylindrique et qui comporte *une* enceinte principale (22) susceptible, dans une première position du distributeur, d'isoler un premier secteur (23) d'un quelconque élément de filtration (5) de l'empilement principal (4) *des* autres secteurs (24) dudit élément de filtration et de communiquer avec ledit premier secteur par l'intermédiaire de l'orifice de communication (35a, 35b, 35c) dudit premier secteur, *et, une* enceinte secondaire (22) susceptible, dans une deuxième position du distributeur éventuellement confondue avec la première position, d'isoler un premier secteur (27) d'un quelconque élément de filtration (8) de l'empilement secondaire (7) *des* autres secteurs (43) dudit élément de filtration et de communiquer avec ledit premier secteur par l'intermédiaire de l'orifice de communication (36-38) dudit premier secteur, caractérisé en ce qu'un passage (22), dont est muni le distributeur, relie les enceintes principale (22) et secondaire (22).

2. Filtre selon la revendication 1, caractérisé en ce qu'un conduit de liaison (28) relie la chambre secondaire (12) à la face cylindrique (15a) et débouche dans cette face cylindrique par un orifice de décharge (28a) situé en un emplacement tel que, d'une part, dans la deuxième position (figures 5, 6 et 7) du distributeur (16), celui-ci obture ledit orifice de décharge, d'autre part, le distributeur comportant un autre passage interne (22) reliant ses deux enceintes principale et secondaire à sa périphérie externe, dans les positions du distributeur (16) autres (figures 1 à 4) que ladite deuxième position, l'orifice de décharge (28a) communique avec ledit autre passage (22).

## Claims

1. Filter constituted by:
— a filter body (1) comprising a plurality of distinct chambers (11, 12, 13) isolated from one another,
— a main stack (4) of filtering elements (5) contained in one (11) of said chambers, called main chamber (11),
— a secondary stack (7) of filtering elements (8) contained in another (12) of said chambers, called secondary chamber (12), each of the filtering elements of the main and secondary stacks having a recessed centre (14) and a cylindrical side (14, 15a), comprising a plurality of sections (23; 24; 27; 43) isolated from one another and being provided on its outer and inner radial circumferences with orifices for communication of each of its sections with said circumferences,
— a shut-off distribution valve (16) which is adjusted to said cylindrical side (15a), which is mounted to rotate about the axis (44) of the cylindrical side, and which comprises one main enclosure (22) capable, in a first position of the distribution valve, of isolating a first section (23) of any one filtering element (5) of the main stack (4) from the other sections (24) of said filtering element and of communcating with said first section, via the orifice for communication (35a, 35b, 35c) of said first section, *and* one secondary enclosure (22) capable, in a second position of the distribution valve possibly merged with the first position, of isolating a first section (27) of any one filtering element (8) of the secondary stack (7) from the other sections (43) of said filtering element and of communicating with said first section via the orifice for communication (36-38) of said first section, characterized in that a port (22), with which the distribution valve is provided, connects the main (22) and secondary (22) enclosures.

2. Filter according to claim 1, characterized in that a connecting duct (28) connects the secondary chamber (12) to the cylindrical side (15a) and opens out in this cylindrical side by a discharge orifice (28a) located at a spot such that, on the one hand, in the second position (figures 5, 6 and 7) of the distribution valve (16), the latter obturates said discharge orifice, on the other hand, the distribution valve comprising another inside port (22) connecting its two main and secondary enclosures to its outer circumference, in the positions of the distribution valve (16) other (figures 1 to 4) than said second position, the discharge orifice (28a) communicates with said other port (22).

## Patentansprüche

1. Filter, bestehend aus:
— einem Filterkörper (1) mit mehreren separaten, voneinander getrennten Kammern (11, 12, 31),
— einem Hauptstapel (4) von Filtrationselementen (5), der in einer der Kammern (11), der sogenannten Hauptkammer (11), enthalten ist,
— einem Nebenstapel (7) von Filtrationselementen (8), der in einer anderen (12) der Kammern, der sogenannten Nebenkammer (12), enthalten ist, wobei jedes der Filtrationselemente des Haupt- und Nebenstapels einen ausgesparten Mittelteil (14) und eine Zylinderfläche (14, 15a) aufweist, mehrere voneinander getrennte Sektoren (23; 24; 27; 43) umfasst und an seinem radialen Aussen- und Innenumfang mit Öffnungen zur Verbindung jedes seiner Sektoren mit den Umfängen versehen ist,
— einem Sektorenverteiler (16), der mit der Zylinderfläche (15a) ausgerichtet ist, drehbar um die Achse (44) der Zylinderfläche angeordnet ist und ein Hauptgehäuse (22) umfasst, das in einer ersten Position des Verteilers einen ersten Sektor (23) eines der Filtrationselemente (5) des Hauptstapels (4) von den anderen Sektoren (24) des Filtrationselements trennen und mit dem ersten Sektor über die Verbindungsöffnung (35a, 35b, 35c) des ersten Sektors kommunizieren kann, und ein Nebengehäuse (22), das in einer zweiten Position des Verteilers, die gegebenenfalls mit der ersten Position zusammenfällt, einen ersten Sektor (27) eines der Filtrationselemente (8) des Nebenstapels (7) von den anderen Sektoren (43) des Filtrationselements trennen und mit dem ersten Sektor über die Verbindungsöffnung (36-38) des ersten Sektors kommunizieren kann, dadurch gekennzeichnet, dass ein Durchlass (22), mit dem der Verteiler versehen ist, das Hauptgehäuse (22) und das Nebengehäuse (22) verbindet.

2. Filter nach Anspruch 1, dadurch gekennzeichnet, dass eine Verbindungsleitung (28) die Nebenkammer (12) mit der Zylinderfläche (15a) verbindet und in diese Zylinderfläche über eine Auslassöffnung (28a) mündet, welche sich an einer derartigen Stelle befindet, dass einerseits in der zweiten Position (Fig. 5, 6 und 7) des Verteilers (16) dieser die Auslassöffnung versperrt, und anderseits die Auslassöffnung (28a), da der Verteiler einen weiteren Innendurchlass (2) aufweist, der seine beiden Haupt- und Nebengehäuse in anderen Positionen des Verteilers (16) (Fig. 1 bis 4) als der genannten zweiten Position mit seinem Aussenumfang verbindet, mit dem anderen Durchlass (22) kommuniziert.

Fig.1

Fig-2

Fig-3

Fig-6

Fig-4

Fig-5

17
6
31
16
47
30
4
5
15a
14
28
25
39
VI
7
8
40
22
37
15
15 a
36
38
12
44
1
11

F1g-7